# EUROPEAN PATENT SPECIFICATION

(11) **EP 4 363 941 B1**
(45) Date of publication and mention of the grant of the patent: **24.09.2025**
(21) Application number: 22761619.0
(22) Date of filing: 10.08.2022
(51) Int. Cl.: G05D 1/00

(54) **UNMANNED AERIAL VEHICLE (UAV) SWARM CONTROL**
SCHWARMSTEUERUNG FÜR UNBEMANNTES LUFTFAHRZEUG (UAV)
COMMANDE D'ESSAIM DE VÉHICULES AÉRIEN SANS PILOTE (UAV)

(30) Priority: 20.08.2021 US 202117407613
(43) Date of publication of application: 08.05.2024
(73) Proprietor: Sony Group Corporation, Tokyo 108-0075 (JP)
(72) Inventor: CHEN, JIANFEI MAX, San Diego, California 92127 (US); WINTER, Edward Theodore, San Diego, California 92127 (US); FAUST, Brent, San Diego, California 92127 (US)
(74) Representative: D Young & Co LLP
(86) International application number: PCT/IB2022/057479
(87) International publication number: WO 2023/021376

(56) References cited:
- US-A1- 2016 378 109
- US-A1- 2017 131 717
- US-A1- 2018 217 589
- US-A1- 2019 318 596
- US-A1- 2020 401 132
- US-B2- 10 694 155
- US-B2- 11 256 257

## Description

### CROSS-REFERENCE TO RELATED APPLICATIONS/INCORPORATION BY REFERENCE

This application claims priority benefit of U.S. Patent Application No. 17/407,613 filed in the U.S. Patent Office on August 20, 2021.

### FIELD

Various embodiments of the disclosure relate to unmanned aerial vehicles. More specifically, various embodiments of the disclosure relate to control of an unmanned aerial vehicle (UAV) swarm.

### BACKGROUND

With advancements in fields of electronics, propulsion systems, and information technology, unmanned aerial vehicles (UAVs) have become more capable and less expensive. The growth of capability and reduction in costs of UAVs have led to use and adoption of UAV-based solutions in various industries and application areas, such as, but not limited to, surveillance, defense, motion picture industry, mining, seaports, oil & gas, warehouses, and other industrial facilities. In certain UAV-based solutions, multiple UAVs may be used together as a group or swarm of UAVs to capture photos and/or videos of a target from multiple locations and/or angles. Conventional methods for control of the UAVs in the swarm of UAVs may be based on techniques that may involve pre-defined missions or path planning for the UAVs. However, dynamic control of the UAVs may be a challenge due to the unpredictability associated with a movement of the target and also due to a requirement to maintain a certain formation within the swarm of UAVs.

Further limitations and disadvantages of conventional and traditional approaches will become apparent to one of skill in the art, through comparison of described systems with some aspects of the present disclosure, as set forth in the remainder of the present application and with reference to the drawings.
US 2016/378109 A1 relates to sensory augmentation devices, and in particular to personal sensory drones. Specifically, US 2016/378109 A1 defines a personal sensory drone system which includes a drone remote control system comprising: a task module to transmit a task to a drone swarm for the drone swarm to execute, the drone swarm including at least two drones, a transceiver to receive information from the drone swarm related to the task, and a user interface module to present a user interface based on the information received from the drone swarm.

### SUMMARY

The invention is defined by the appended claims, which relate to a system and a method for unmanned aerial vehicle (UAV) swarm control, and is provided substantially as shown in, and/or described in connection with, at least one of the figures.

These and other features and advantages of the present disclosure may be appreciated from a review of the following detailed description of the present disclosure, along with the accompanying figures in which like reference numerals refer to like parts throughout.

### BRIEF DESCRIPTION OF THE DRAWINGS

FIG. 1 is a diagram that illustrates an exemplary network environment for control of an unmanned aerial vehicle swarm, in accordance with an embodiment of the disclosure.
FIG. 2 is a block diagram of an exemplary Ground Control Station of FIG. 1, in accordance with an embodiment of the disclosure.
FIG. 3 is a block diagram of an exemplary unmanned aerial vehicle of FIG. 1, in accordance with an embodiment of the disclosure.
FIG. 4 is a block diagram that illustrates an exemplary processing pipeline operation for unmanned aerial vehicle swarm control, in accordance with an embodiment of the disclosure.
FIGs. 5A, 5B, and 5C are diagrams that illustrate exemplary scenarios of unmanned aerial vehicle swarm control, in accordance with an embodiment of the disclosure.
FIGs. 6A, 6B, and 6C are diagrams that illustrate exemplary scenarios for unmanned aerial vehicle swarm control using an electronic device, in accordance with an embodiment of the disclosure.
FIG. 7 is a flowchart that illustrates an exemplary method for unmanned aerial vehicle swarm control, in accordance with an embodiment of the disclosure.

### DETAILED DESCRIPTION

The following described implementations may be found in the disclosed system and method for an unmanned aerial vehicle (UAV) swarm control. The system may include a plurality of Unmanned Aerial Vehicles (UAVs) that may be configured to form a group (or a swarm arrangement). The plurality of UAVs may include a leader UAV and a plurality of follower UAVs. The plurality of follower UAVs may be communicably coupled with the leader UAV. The system may further include a Ground Control Station (GCS) that may include circuitry configured to determine a geo-location (i.e. current location) of the leader UAV. The circuitry of the GCS may be further configured to determine formation information based on the determined geo-location of the leader UAV and/or based on a request (such as, but is not limited to, a user request) for formation that may be received at the GCS. The formation information determined by the circuitry of the GCS may indicate at least a relative position for each of the plurality of follower UAVs with respect to the leader UAV. The GCS may be further configured to transmit the determined formation information directly to each of the leader UAV and the plurality of follower UAVs. Each of the plurality of follower UAVs may be further configured to receive the transmitted formation information from the GCS, and adjust a position of the corresponding follower UAV based on the received formation information. In an embodiment, the GCS may be integrated with the leader UAV.

In another embodiment, following described implementations may be found in an electronic device for an unmanned aerial vehicle (UAV) swarm control. The electronic device may act as a leader device (for example, but is not limited to, a controller, a computing device, a ground station controller, or a wearable device) with one or more functionalities of leader UAV or GCS. The electronic device may be configured to determine target information that may indicate a location of a target to be captured by the plurality of follower UAVs. The target may be an animate object or an inanimate object which is to be captured by an image capturing device (for example a camera) integrated with one or more of the plurality of follower UAVs. The location of the target may be at an offset distance from a location of the electronic device. The electronic device may be further configured to determine the formation information for the plurality of follower UAVs. The determined formation information may indicate at least a relative position for each of the plurality of follower UAVs with respect to the electronic device or with respect to the target to be captured. The electronic device may be further configured to transmit the determined formation information and the target information directly to each follower UAV of the plurality of follower UAVs. Each follower UAV of the plurality of follower UAVs may receive the transmitted formation information and the target information and may further adjust a position of the corresponding follower UAV based on the received formation information and the target information, to maintain relative distance between follower UAV and the electronic device or the target, irrespective of any change in movement of the electronic device or the target, or any change in distance (angle or orientation) of the electronic device (or the target) with respect to each follower UAV.

The disclosed GCS and/or the disclosed electronic device may directly control positions of the plurality of follower UAVs and/or the leader UAV based on direct communication of the determined formation information with the plurality of follower UAVs and/or the leader UAV. The formation information may include, but is not limited to, instructions to adjust positions of each of the plurality of follower UAVs and/or the leader UAV. In addition, the electronic device may also transmit the target information to the plurality of follower UAVs. The target information may indicate a location of the target to be captured, while the electronic device itself may be at the offset distance from the target. The movements (or angle or orientation) of the plurality of follower UAVs may be automatically controlled, based on the movement of either the leader UAV and/or the target, by use of the formation information and/or the target information while maintain a set formation of the plurality of UAVs (i.e. without a need for complex computer vision techniques). The automatic control of the movements of the plurality of follower UAVs may eliminate a need for manual control of each of the plurality of follower UAVs, individually. This may further reduce a cost and manual effort associated with the control of the plurality of UAVs. The automatic control may also ensure that the plurality of follower UAVs may remain in a desired formation with respect to the leader UAV and/or to capture the target accurately which may be in motion. The automatic control may also improve a quality of images/videos captured by each follower UAV due to accurate and dynamic positioning of the plurality of follower UAVs with respect to one another, the leader UAV, and the target.

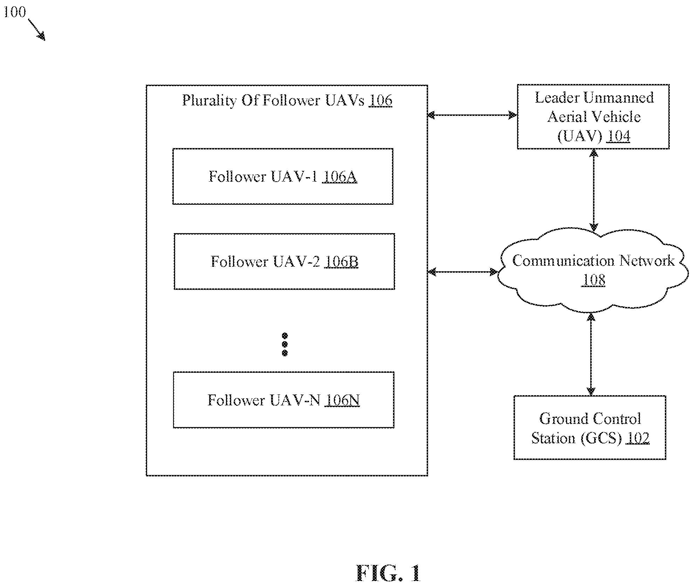

FIG. 1 is a diagram that illustrates an exemplary network environment for control of an unmanned aerial vehicle swarm, in accordance with an embodiment of the disclosure. With reference to FIG. 1, there is shown a network environment including a system 100. The system 100 may include a Ground Control Station (GCS) 102, a leader Unmanned Aerial Vehicle (UAV) 104, and a plurality of follower UAVs 106 (such as, a follower UAV-1 106A, a follower UAV-2 106B, ...and a follower UAV-N 106N). The GCS 102 may be communicatively coupled to the leader Unmanned Aerial Vehicle (UAV) 104 and the plurality of follower UAVs 106, via a communication network 108. The GCS 102 may be in direct communication with the leader UAV 104 and with each of the plurality of follower UAVs 106, via the communication network 108. The leader UAV 104 may be directly in communication with each of the plurality of follower UAVs 106. The leader UAV 104 and the plurality of follower UAVs 106 may be configured to form a group (or swarm arrangement).

The N number of the plurality of follower UAVs 106 shown in FIG. 1 is presented merely as an example. The plurality of follower UAVs 106 may include only two or more than N follower UAVs for UAV swarm control, without deviation from the scope of the disclosure. For the sake of brevity, only N follower UAVs have been shown in FIG. 1. However, in some embodiments, there may be more than N follower UAVs, without limiting the scope of the disclosure.

The GCS 102 may include suitable logic, circuitry, interfaces, and/or code that may be configured to communicate with the leader UAV 104 and each of the plurality of follower UAVs 106. The GCS 102 may be in direct communication with the leader UAV 104 and each of the plurality of follower UAVs 106. The GCS 102 may receive a user request for control of a plurality of UAVs (including the leader UAV 104 and the plurality of follower UAVs 106). The GCS 102 may determine a geo-location of the leader UAV 104 and determine formation information based on the determined geo-location and/or the user request (i.e. including user inputs). The formation information may indicate at least a relative position for each of the plurality of follower UAVs 106 with respect to the leader UAV 104. The GCS 102 may transmit the determined formation information to the leader UAV 104 and the plurality of follower UAVs 106 to control a formation of the plurality of UAVs (including the leader UAV 104 and the plurality of follower UAVs 106). In an embodiment, the GCS 102 may include a formation control software (FCS) or an application to determine the formation information. Examples of the GCS 102 may include, but are not limited to, a station communication system, a communication device, a UAV controller, a portable computing device, a controller system, a smartphone, a cellular phone, a mobile phone, a gaming device, a mainframe machine, a distributed computing system (such as, an edge computing system), a computer workstation, and/or a consumer electronic (CE) device.

In an embodiment, the GCS 102 may include a server, which may be configured determine the formation information for the plurality of UAVs, which includes the leader UAV 104 and the plurality of follower UAVs 106, based on the user input. The server of the GCS 102 may be configured to transmit the determined formation information to the leader UAV 104 and each of the plurality of follower UAVs 106. The server of the GCS 102 may be implemented as a cloud server and may execute operations through web applications, cloud applications, HTTP requests, repository operations, file transfer, and the like. Other example implementations of the server may include, but are not limited to, a database server, a file server, a web server, a media server, an application server, a mainframe server, or a cloud computing server. In another embodiment, the GCS 102 may be implemented as a plurality of distributed cloud-based resources by use of several technologies that are well known to those ordinarily skilled in the art.

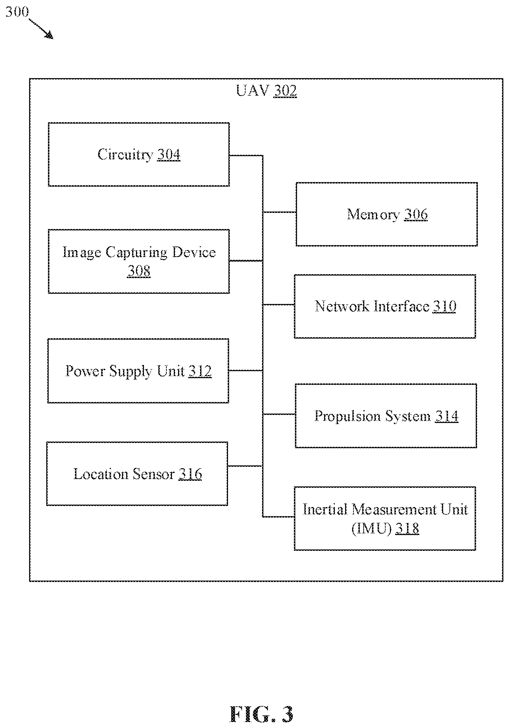

The plurality of UAVs of the system 100 may include the leader UAV 104 and the plurality of follower UAVs 106. The plurality of UAVs may include suitable logic, circuitry, and/or interfaces that may correspond to unmanned aerial vehicles or systems controlled by a remote pilot, through a remote system (such as, the GCS 102), or capable of autonomous flights. Typically, the plurality of UAVs may be a component of an unmanned aircraft system (UAS), which may include additionally a ground-based controller and a system of communications with the UAV. Essentially, a UAV may be defined as a flying robot that may be remotely controlled or fly autonomously through software-controlled flight plans in their embedded systems, in conjunction with onboard sensors and GPS (not shown), and/or complex dynamic automation systems. UAVs may be typically meant to carry out tasks that range from the mundane to the ultra-dangerous. In an embodiment, the robotic UAVs may operate without a pilot on-board and with different levels of autonomy based on the requirements. Each of the plurality of UAVs may include one or more on-board image capturing devices (e.g., an image capturing device 308 shown in FIG. 3) to capture images or videos of a target from different angles or locations. Examples of the plurality of UAVs may include, but are not limited to, a drone, a smart-plane, or other such aircraft which may be controlled by pre-programmed flight plans and/or automation systems (such as the GCS 102). In accordance with a frame type and number of motors, various examples of the plurality of UAVs may include, but are not limited to, a tricopter with three arms and one motor, a quadcopter with four arms and one motor, a hexacopter with six arms and one motor, a Y6 copter with six arms and six motors, an octocopter with eight arms and one motor, and/or an X8 with eight arms and eight motors.

The communication network 108 may include a communication medium through which the GCS 102 and the plurality of UAVs may communicate with one another. The communication network 108 may be one of a wired connection or a wireless connection or a combination thereof. Examples of the communication network 108 may include, but are not limited to, the Internet, a cloud network, Cellular or Wireless Mobile Network (such as Long-Term Evolution and 5G New Radio), a Wireless Fidelity (Wi-Fi) network, a Personal Area Network (PAN), a Local Area Network (LAN), or a Metropolitan Area Network (MAN). Various devices in the network environment including the system 100 may be configured to connect to the communication network 108 in accordance with various wired and wireless communication protocols or a combination of protocols including both wired protocols and wireless protocols. Examples of such wired and wireless communication protocols may include, but are not limited to, at least one of a Transmission Control Protocol and Internet Protocol (TCP/IP), User Datagram Protocol (UDP), Hypertext Transfer Protocol (HTTP), File Transfer Protocol (FTP), Zig Bee, EDGE, IEEE 802.11, light fidelity (Li-Fi), 802.16, IEEE 802.11s, IEEE 802.11g, multi-hop communication, wireless access point (AP), device to device communication, cellular communication protocols, and Bluetooth (BT) communication protocols.

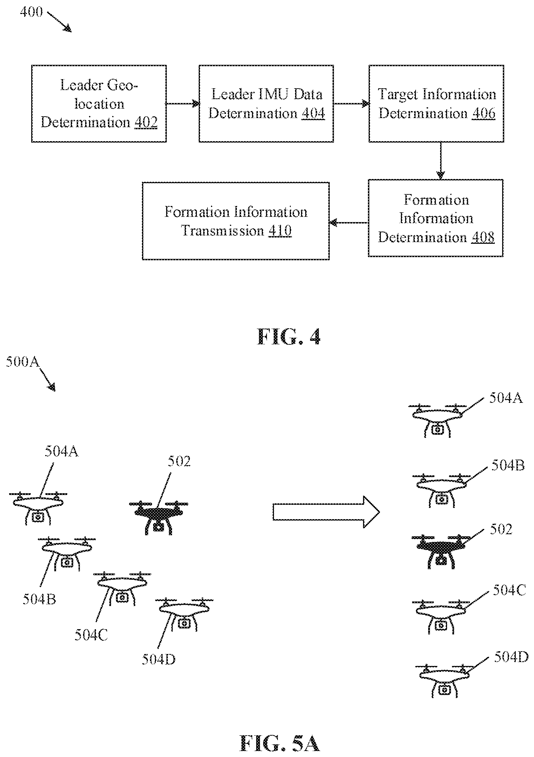

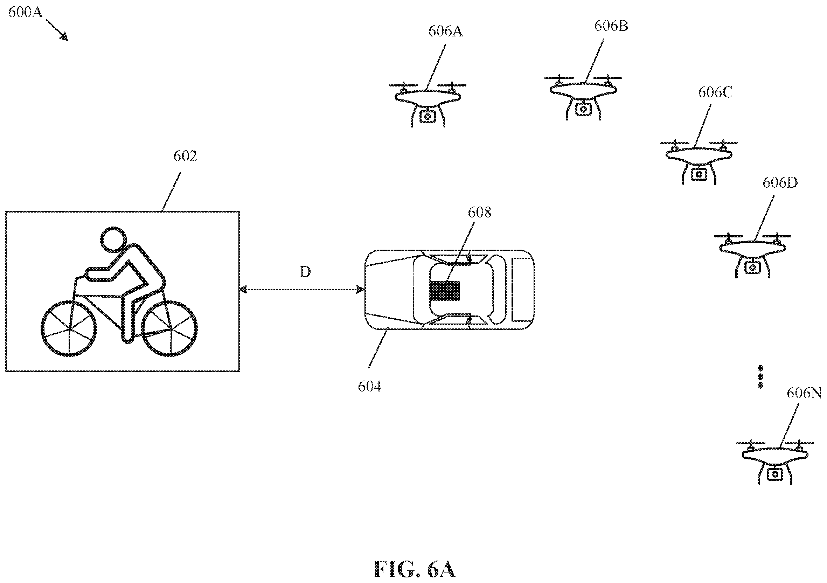

In operation with respect to FIG. 1, the GCS 102 may be configured to receive a user request for the plurality of UAVs including the leader UAV 104 and the plurality of follower UAVs 106. The user request may be received based on a user input from a user or a human controller associated with the GCS 102. The user input may be indicative of a selection of a UAV from the plurality of UAVs as a leader UAV (e.g., the leader UAV 104) and a selection of remaining UAVs (i.e. from the plurality of UAVs) as a plurality of follower UAVs (e.g., the plurality of follower UAVs 106). The user input may be further indicative of a desired or required type of formation for the plurality of UAVs. The GCS 102 may be further configured to determine a geo-location (i.e. current location) of the leader UAV 104. The GCS 102 may be further configured to determine formation information based on the determined geo-location of the leader UAV 104 and/or the received user request received. The determined formation information may indicate information about the formation of the plurality of UAVs in a particular swarm arrangement. Certain examples of the formation of the plurality of UAVs are described, for example, in FIGs. 5A-5C and 6A-6C. In an embodiment, the determined formation information may indicate at least a relative position for each of the plurality of follower UAVs 106 with respect to the leader UAV 104 or the target (shown in FIGs. 6A-6C). The formation information may include information such as, but is not limited to, a geographical starting point, a geographical ending point, or one or more altitude positions for the plurality (or group) of UAVs along a flight path. Further the formation information may also indicate information such as, but is not limited to, a series of intermediate geographical positions or waypoints in the flight path of the plurality of UAVs, a separation distance between adjacent UAVs of the plurality of UAVs, or information about one or more speeds or velocities of the plurality of UAVs at corresponding waypoints.

The GCS 102 may be further configured to transmit the determined formation information directly to each of the leader UAV 104 and the plurality of follower UAVs 106, in the group or swarm of UAVs. Each of the plurality of follower UAVs 106 of the system 100 may be further configured to directly receive the transmitted formation information from the GCS 102 (i.e. not via the leader UAV 104). Each follower UAV may be further configured to adjust a position (or angle or orientation) of the corresponding UAV with respect to the leader UAV 104, based on the received formation information from the GCS 102.

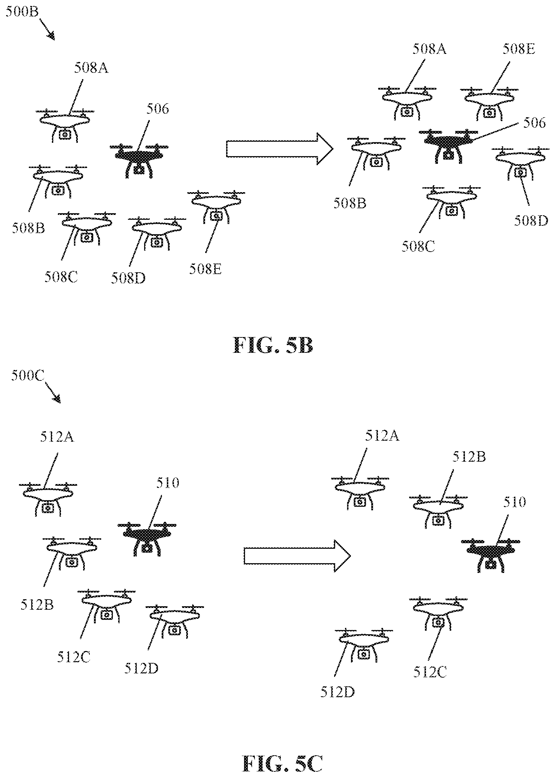

In an embodiment, the GCS 102 may be integrated with the leader UAV 104. In such case, the leader UAV 104 may include the formation control software (FCS) or an application to determine the formation information. In another embodiment, the leader UAV (e.g., the leader UAV 104) may be an electronic device, such as, but is not limited to, an automobile (as described, for example, in FIG 5A) and/or a portable electronic device (as described, for example, in FIG 5B and FIG 5C) and/or a wearable device (as described, for example, in FIG 5C). In an embodiment, the electronic device (i.e., with one or more functionalities of the GCS 102 and/or the leader UAV) may be configured to determine target information that may indicate a location of a target (i.e. animate or inanimate object) to be captured. The location of the target may be at an offset distance from a location of the electronic device. The electronic device may be configured to determine formation information for the plurality of follower UAVs 106. The determined formation information may indicate at least a relative position for each of the plurality of follower UAVs 106 with respect to the electronic device or the target. The electronic device may be configured to transmit the determined formation information and the target information directly to each follower UAV of the plurality of follower UAVs 106. Each follower UAV of the plurality of follower UAVs 106 may receive the transmitted formation information and the target information and may further adjust a position of the corresponding follower UAV based on the received formation information and the target information. Details of the electronic device are further provided, for example, in FIGs. 6A-6C.

The disclosed GCS 102 and/or the disclosed electronic device may control positions of the plurality of follower UAVs 106 and/or the leader UAV 104 based on direct communication of the determined formation information with the plurality of follower UAVs 106 and/or the leader UAV 104. The formation information may include instructions to adjust positions (or an orientation or a field of view of integrated image capturing devices) of each of the plurality of follower UAVs 106 and/or the leader UAV 104. In addition, the electronic device may also transmit the target information to the plurality of follower UAVs 106. The target information may indicate a location of the target to be captured, while the electronic device itself may be at an offset distance from the target (i.e. in proximity to the electronic device). The movements of the plurality of follower UAVs 106 may be automatically controlled, based the movement of the leader UAV 104 and/or the target, by use of the formation information and/or the target information. The dynamic computation of the formation information and/or the target information based on the recent location or movement of the leader UAV 104 and/or the target, may provide dynamic control of the plurality of follower UAVs 106 to form (or modify to) a desired swarm arrangement. The automatic and dynamic control of the movements of the plurality of follower UAVs 106 may eliminate a need for manual control of each of the plurality of follower UAVs 106, individually. This may further reduce a cost and effort associated with the control of the plurality of UAVs. The automatic control may also ensure that the plurality of follower UAVs may remain in a desired formation with respect to the leader UAV 104 and capture the target, which may be in motion. The automatic control may also improve or achieve a quality of images/video captured by each follower UAV due to accurate and dynamic positioning of the plurality of follower UAVs 106 with respect to one another, the leader UAV 104, and the target.

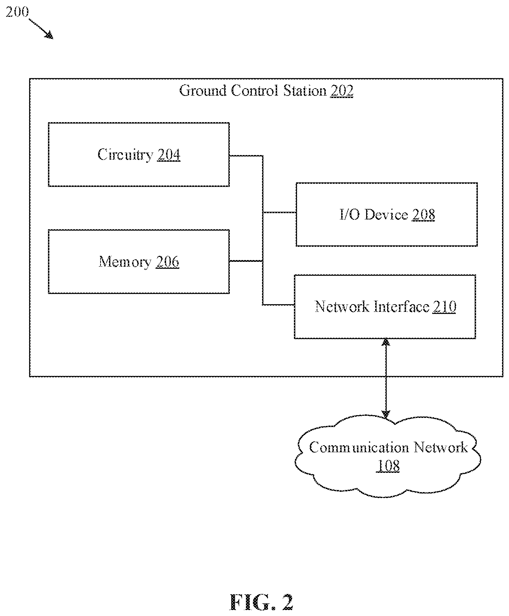

FIG. 2 is a block diagram of an exemplary Ground Control Station of FIG. 1, in accordance with an embodiment of the disclosure. FIG. 2 is explained in conjunction with elements from FIG. 1. With reference to FIG. 2, there is shown a block diagram 200 of the ground control station (GCS) 202 (such as, the GCS 102 in FIG. 1). The GCS 202 may include circuitry 204, a memory 206, an input/output (I/O) device 208, and a network interface 210. The network interface 210 may be connected to the communication network 108 (FIG. 1). The circuitry 204 may be communicatively coupled to the memory 206, the I/O device 208, and the network interface 210.

The circuitry 204 may include suitable logic, circuitry, and/or interfaces that may be configured to execute program instructions associated with different operations to be executed by the GCS 202. For example, one or more of such operations may be to dynamically determine a leader UAV from a group of UAVs and assign other UAVs in the group of UAVs as follower UAVs. The determination of the leader UAV (e.g., the leader UAV 104) and the plurality of follower UAVs (e.g., the plurality of follower UAVs 106) may be based on the input received from a user (not shown). The one or more operations may further include the determination of the geo-location of the leader UAV 104, the determination of the formation information based on the user input and/or the geo-location of the leader UAV 104, and the transmission of the formation information to the leader UAV 104 and the plurality of follower UAVs 106. The circuitry 204 may include one or more specialized processing units, which may be implemented as a separate processor. In an embodiment, the one or more specialized processing units may be implemented as an integrated processor or a cluster of processors that perform the functions of the one or more specialized processing units, collectively. The circuitry 204 may be implemented based on a number of processor technologies known in the art. Examples of implementations of the circuitry 204 may be an X86-based processor, a Graphics Processing Unit (GPU), a Reduced Instruction Set Computing (RISC) processor, an Application-Specific Integrated Circuit (ASIC) processor, a Complex Instruction Set Computing (CISC) processor, a microcontroller, a central processing unit (CPU), other control circuits and/or a combination thereof.

The memory 206 may include suitable logic, circuitry, and/or interfaces that may be configured to store the program instructions executable by the circuitry 204. The memory 206 may be further configured to store information such as, but not limited to, the geo-location of the leader UAV 104, the determined formation information, a flight path of the plurality of UAVs, and/or the target information. Example implementations of the memory 206 may include, but are not limited to, Random Access Memory (RAM), Read Only Memory (ROM), Electrically Erasable Programmable Read-Only Memory (EEPROM), Hard Disk Drive (HDD), a Solid-State Drive (SSD), a CPU cache, and/or a Secure Digital (SD) card. Other forms of memory devices known in the art and not listed herein may also be covered within the scope of the embodiments of the present disclosure.

The I/O device 208 may include suitable logic, circuitry, and interfaces that may be configured to receive an input and provide an output based on the received input. The I/O device 208 may include various input and output devices, which may be configured to communicate with the circuitry 204. In example, the I/O device 208 may receive, from the user, a user input associated with the plurality of UAVs of the system 100. For example, the user input is to create a particular formation by the plurality of follower UAVs 106 or the user input by indicate a particular flight path to be followed by each of the plurality of UAVs. In example, the I/O device 208 may render an output associated with a set of images captured by the plurality of UAVs of the system 100. Examples of the I/O device 208 may include, but are not limited to, a touch screen, a keyboard, a mouse, a joystick, a microphone, a display device, and a speaker.

The network interface 210 may include suitable logic, circuitry, interfaces, and/or code that may be configured to facilitate communication between the GCS 102 and each UAV in the plurality of UAVs, such as, the leader UAV 104 and the plurality of follower UAVs 106A, via the communication network 108. The network interface 210 may be configured to implement known technologies to support wired or wireless communication. The network interface 210 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, and/or a local buffer.

The network interface 210 may be configured to communicate via wireless communication with networks, such as the Internet, an Intranet, and/or a wireless network, such as a cellular telephone network, a wireless local area network (WLAN), personal area network, and/or a metropolitan area network (MAN). The wireless communication may use any of a plurality of communication standards, protocols and technologies, such as Global System for Mobile Communications (GSM), Enhanced Data GSM Environment (EDGE), wideband code division multiple access (W-CDMA), code division multiple access (CDMA), LTE, time division multiple access (TDMA), Bluetooth, Wireless Fidelity (Wi-Fi) (such as IEEE 802.11, IEEE 802.11b, IEEE 802.11g, IEEE 802.11n, and/or any other IEEE 802.11 protocol), voice over Internet Protocol (VoIP), Wi-MAX, Internet-of-Things (IoT) technology, Machine-Type-Communication (MTC) technology, a protocol for email, instant messaging, and/or Short Message Service (SMS).

The functions or operations executed by the GCS 102, as described in FIG. 1, may be performed by the circuitry 204 of the GCS 202. Operations executed by the circuitry 204 are described in detail, for example, in FIGs. 4, 5A, 5B, 5C, 6A, 6B, and 6C.

FIG. 3 is a block diagram of an exemplary unmanned aerial vehicle (UAV) of FIG. 1, in accordance with an embodiment of the disclosure. FIG. 3 is explained in conjunction with elements from FIG. 1 and FIG. 2. With reference to FIG. 3, there is shown a diagram 300 that includes an exemplary UAV 302 (such as, the leader UAV 104 or one of the plurality of follower UAVs 106). The UAV 302 may include circuitry 304, a memory 306, an image capturing device 308, a network interface 310, a power supply unit 312, a propulsion system 314, a location sensor 316, and an inertial measurement unit (IMU) 318. The network interface 310 may be connected to the communication network 108 (shown in FIG. 1). The circuitry 304 may be communicatively coupled to the memory 306, the image capturing device 308, the network interface 310, the power supply unit 312, the propulsion system 314, the location sensor 316, and the IMU 318.

The circuitry 304 may include suitable logic, circuitry, and interfaces that may be configured to execute program instructions associated with different operations to be executed by the UAV 302. For example, one or more of such operations may be to receive formation information from the GCS 202 (shown in FIG. 2), assign a UAV from the plurality of UAVs as a leader UAV (e.g., the leader UAV 104), and assign the other UAVs in the plurality of UAVs as follower UAVs, such as, the plurality of follower UAVs 106. The one or more operations may further include control of a flight path, position, altitude, speed, or orientation of the UAV 302, based on the received formation information. The circuitry 304 may be further configured to control the power supply unit 312 of the UAV 302 and notify the user when a battery charge associated with the power supply unit 312 becomes less than a certain threshold. In an embodiment, the circuitry 304 may be implemented based on a number of processor technologies known in the art. Examples of implementations of the circuitry 304 may be an X86-based processor, a Graphics Processing Unit (GPU), a Reduced Instruction Set Computing (RISC) processor, an Application-Specific Integrated Circuit (ASIC) processor, a Complex Instruction Set Computing (CISC) processor, a microcontroller, a central processing unit (CPU), other control circuits and/or a combination thereof.

The memory 306 may include suitable logic, circuitry, and/or interfaces that may be configured to store the program instructions executable by the circuitry 304. In an embodiment, the memory 306 may be configured to store the received formation information and/or the target information. Example implementations of the memory 306 may include, but are not limited to, Random Access Memory (RAM), Read Only Memory (ROM), Electrically Erasable Programmable Read-Only Memory (EEPROM), Hard Disk Drive (HDD), a Solid-State Drive (SSD), a CPU cache, and/or a Secure Digital (SD) card.

The image capturing device 308 may include suitable logic, circuitry, and interfaces that may be configured to capture an image or a plurality of images or a video stream of a target object (not shown in FIG. 3). In an embodiment, the image capturing device 308 may be activated by the GCS 202 or by the leader UAV 104 for capture of the image/video of the target object. In an embodiment, the image capturing device 308 may be activated based on a user input to capture of the image/video of the target object. Examples of the image capturing device 308 may include, but are not limited to, an image sensor, a wide-angle camera, a 360-degree camera, an action camera, a closed-circuit television (CCTV) camera, a camcorder, a digital camera, camera phones, a time-of-flight camera (ToF camera), a night-vision camera, and/or other image capturing devices.

The network interface 310 may include suitable logic, circuitry, interfaces, and/or code that may be configured to facilitate communication between the UAV 302, the GCS 202, and/or other UAVs in the plurality of UAVs. The network interface 210 may be configured to implement known technologies to support wired or wireless communication. The network interface 310 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, and/or a local buffer. The functions of the network interface 310 may be similar to the functions of the network interface 210 described, for example, in FIG. 2. Therefore, the description of the network interface 310 is omitted from the disclosure for the sake of brevity.

The power supply unit 312 may include suitable logic, circuitry, and interfaces that may be configured to execute program instructions associated with different operations to be executed by the UAV 302. The power supply unit 312 may use a combustible energy source or a solar panel attached to the UAV 302 to provide power to the UAV 302. In an embodiment, the power supply unit 312 may use fuel cells that may use hydrogen to generate an electric current which can be used to power a motor associated with the propulsion system 314. Combustible energy source and solar power sources are well known to a person of ordinary skill in the art and are therefore omitted from discussion of the embodiments of the present disclosure. The power supply unit 312 may power the entire UAV 302 and enable operation of various components of the UAV 302. In an embodiment, a combination of different energy sources may be used to power the UAV 302. The selection of the power supply sources may depend on the type of the UAV 302 (for example, based on a weight, payload capacity, dimensions, and a wing-type of the UAV 302). In an embodiment, the power supply unit 312 may include a battery to store energy generated by the energy source. The battery may be a source of electric power for one or more electric circuits of the UAV 302. For example, the battery may be a source of electrical power to the circuitry 304, the memory 306, the image capturing device 308, the network interface 310, the propulsion system 314, the location sensor 316, and the IMU 318. The battery may be a rechargeable battery. The battery may be the source of electrical power to start or control the movement of the UAV 302. In some embodiments, the battery may correspond to a battery pack, which may have a plurality of clusters of batteries. Examples of the battery may include, but are not limited to, a lead acid battery, a nickel cadmium battery, a nickel-metal hydride battery, a lithium-ion battery, and other rechargeable batteries.

The propulsion system 314 is a set of mechanical and electrical components that generates thrust to push the UAV 302 upward/downward and/or forward/backward during the flight. The propulsion system 314 may control the movement of the UAV 302 based on one or more control instruction received from the circuitry 304 or the GCS 202. The propulsion system 314 may further include, but is not limited to, motors, propellers, and an electronic speed controller (ESC).

The motors may be brushless direct current (BLDC) motors in which coils are fixed either to an outer casing or an inner casing of the motors, and the magnets are configured to rotate. The brushless DC motors may be one of an in-runner, an out-runner, or hybrid runner motors, based on a rotation speed for a given voltage. The propellers may include rotor blades with a pre-specified diameter that rotate on a pre-configured speed to produce a minimum thrust for the UAV 302. In addition to the pre-specified diameter, the propellers may be further associated with a shape, an angle of attack, a pitch, and a surface area of the rotor blades. The propellers may be manufactured using different materials, such as injection-molded plastic, fiber-reinforced polymer, or natural materials (such as wood). The ESC may comprise suitable logic, circuitry, interfaces, and/or code that may be configured to control the speed and direction of the motors and accordingly control the speed and direction of movement of the UAV 302. The ESC may be configured to receive the one or more control instructions from the GCS 202 or the circuitry 304 to control the speed and the direction of the UAV 302.

The location sensor 316 may include suitable logic, circuitry, and/or interfaces that may be configured to determine a current geo-location of the UAV 302. The location sensor 316 may be configured to communicate the current geo-location to the circuitry 304 of the UAV 302 and the GCS 202. Examples of the location sensor 316, may include, but are not limited to, a Global Navigation Satellite System (GNSS)-based sensor. Examples of the GNSS-based sensor may include, but are not limited to, global positioning sensor (GPS), Global Navigation Satellite System (GLONASS), or other regional navigation systems or sensors. In another embodiment, the location sensor 316 may provide information about the geo-location based on real-time kinematics (RTK) positioning.

The IMU 318 may include suitable logic, circuitry, and/or interfaces that may be configured to detect current orientation of the UAV 302 and provide the detected current orientation, as IMU data, to the circuitry 304 or the GCS 202. Based on the IMU data, the GCS 202 may determine the formation information associated with the current orientation of the UAV 302 and transmit the determined formation information to the circuitry 304 or to the other UAVs. The circuitry 304 may further control the orientation of the UAV 302 based on the received formation information determined by the GCS 202 based on the current orientation of the UAV 302. Examples of the IMU 318 may include, but are not limited to, a motion sensor, a tilt sensor, an accelerometer, or a gyro sensor.

It should be noted that the UAV 302 in FIG. 3 is presented merely as an example and should not be construed as limiting for the disclosure. The present disclosure may be also applicable to other types of unmanned vehicles, such as an unmanned aircraft system (UAS). A person of ordinary skill in the art will understand that the UAV 302 may also include other suitable components or systems, in addition to the components or systems which are illustrated herein to describe and explain the function and operation of the present disclosure. A detailed description for the other components or systems of the UAV 302 has been omitted from the disclosure for the sake of brevity.

FIG. 4 is a block diagram that illustrates an exemplary processing pipeline for unmanned aerial vehicle swarm control, in accordance with an embodiment of the disclosure. FIG. 4 is explained in conjunction with elements from FIG. 1, FIG. 2, and FIG. 3. With reference to FIG. 4, there is shown an exemplary processing pipeline 400 of operations from 402 to 410. The operations 402 to 410 of the processing pipeline 400 may be performed by any computing system, apparatus, or device, such as by the system 100 of FIG. 1 or the GCS 202 of FIG. 2.

At 402, a geo-location of a leader UAV may be determined. In an embodiment, the circuitry 204 of the GCS 202 may be configured to determine the geo-location of the leader UAV (e.g., the leader UAV 104) from a plurality of UAVs (such as, the leader UAV 104 and the plurality of follower UAVs 106). Prior to the determination of the geo-location, the circuitry 204 may receive a user request from a user or a human controller associated with the GCS 202. The user request may include a user input indicative of an assignment of roles (e.g., a leader UAV role or a follower UAV role) to UAVs in the plurality of UAVs. The user input may be further indicative of a desired alignment or positions of the follower UAVs in a certain formation with respect to the leader UAV of the plurality of UAVs. The positions may correspond to different coordinates in XYZ plane, and the alignment may correspond to different angles or the orientations of the UAVs with respect to the leader UAV or the target to capture. In an embodiment, the circuitry 204 may assign the role of a leader UAV to a certain UAV (e.g., the leader UAV 104) and assign the role of a follower UAV to remaining UAVs (e.g., the plurality of follower UAVs 106) of the plurality of UAVs, based on the user inputs in the user request. In an alternate embodiment, the assignment of the roles of the leader UAV and follower UAVs to the various UAVs in the plurality of UAVs may be pre-defined. In an embodiment, the circuitry 204 may transmit, to the plurality of UAVs, information associated with the role assigned to the corresponding UAV. Based on the information associated with the role received by the UAV, the corresponding UAV may assign the role in the plurality of UAVs. For example, based on the information associated with the role, a UAV (such as, the leader UAV 104) may assign the role of a leader in the plurality of UAVs. Similarly, a UAV (such as, a UAV of the plurality of follower UAVs 106) may assign the role of a follower in the plurality of UAVs. In an embodiment, the user inputs may further include information about, but is not limited to, a geographical starting point, a geographical ending point, a particular flight path to be taken by the plurality of UAVs between the geographical starting point and the geographical ending point, one or more altitude positions to be taken by the plurality of UAVs along the flight path, or a series of intermediate geographical positions or waypoints in the flight path.

In an embodiment, the circuitry 204 of the GCS 202 may transmit a geo-location request to a UAV assigned with the role of a leader UAV (e.g., the leader UAV 104) in the plurality of UAVs. Based on the receipt of the geo-location request by the leader UAV (e.g., the leader UAV 104), the leader UAV may further determine the geo-location of the leader UAV and further transmit the determined geo-location of the leader UAV to the circuitry 204 of the GCS 202. For example, the leader UAV 104 may use an on-board location sensor (e.g., the location sensor 316) to determine the geo-location of the leader UAV 104 and transmit information associated with the determined geo-location to the circuitry 204 of the GCS 202. Based on the receipt of the information associated with the geo-location of the leader UAV 104, the circuitry 204 may determine the geo-location of the leader UAV 104. In an embodiment, the circuitry 204 of the GCS 202 may periodically receive the geo-location of the leader UAV 104 such that GCS 202 may be aware about the current location of the leader UAV 104 on real-time basis.

At 404, IMU data associated with the leader UAV (e.g., the leader UAV 104) may be determined. In an embodiment, the circuitry 204 may determine the IMU data associated with the leader UAV 104. The circuitry 204 may transmit an IMU data request to the leader UAV 104. Based on the receipt of the IMU data request, the leader UAV 104 may use an on-board orientation sensor (such as, the IMU 318) to determine the IMU data. The leader UAV 104 may further transmit the determined IMU data to the circuitry 204 of the GCS 202. In an embodiment, the leader UAV 104 may be configured to smoothen sensor readings included in the IMU data, prior to the transmission of the IMU data to the GCS 202. For example, a Kalman filter may be used to smoothen the sensor readings. The smoothened sensor readings in the IMU data may improve prediction of change in direction of the leader UAV 104 based on the IMU data. The circuitry 204 of the GCS 202 may be configured to receive the determined IMU data from the leader UAV 104. In an embodiment, the IMU data may include information, such as, but is not limited to, motion information, tilt information, yaw rotation information, pitch rotation information, roll rotation information, speed information, acceleration information, or gyroscope measurements associated with the leader UAV 104. In addition to the transmission of the geo-location, the IMU data related to the leader UAV 104, may provide accurate details related to exact position and/or orientation of the leader UAV 104 to the GCS 202. In an embodiment, the circuitry 204 of the GCS 202 may periodically receive the IMU data of the leader UAV 104 such that GCS 202 may be aware about the current orientation (or acceleration or change in direction) of the leader UAV 104 on real-time basis. In some embodiments, the IMU 318 may be integrated in an electronic device and/or in the target (i.e. described in FIGs 6A-6C) to detect the change in the direction, tilt, orientation or acceleration.

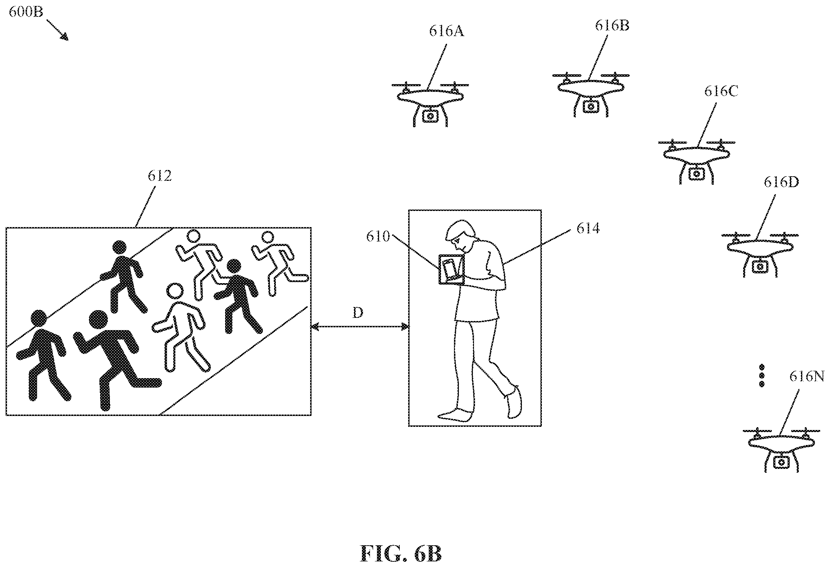

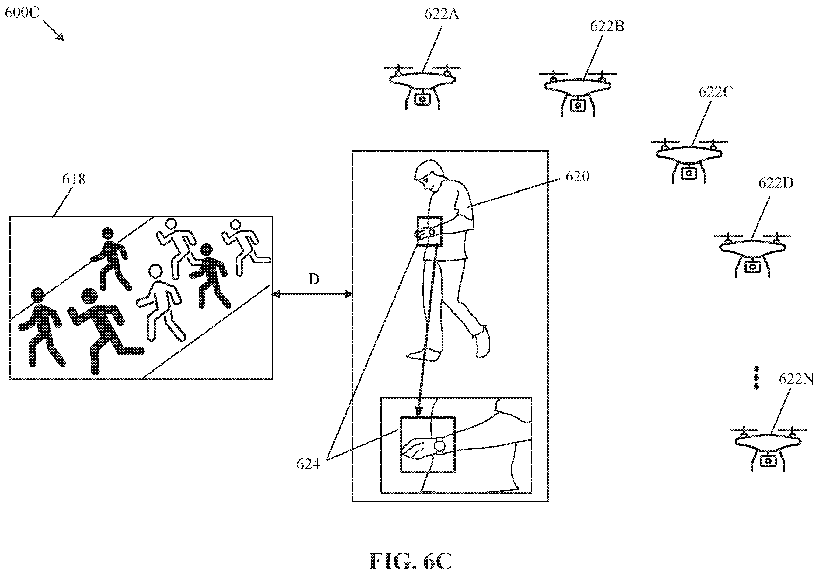

At 406, target information may be determined. In an embodiment, the circuitry 204 of the GCS 202 may be configured to determine the target information. The target information may be indicative of at least one of, but is not limited to, an identification of the target, or a location of the target to be captured. In an embodiment, the location of the target may be at an offset distance from the GCS 202 (for example, an electronic device as described, for example, in FIGs. 6A-6C). In another embodiment, the circuitry 204 of the GCS 202 may transmit a request for the target information to the leader UAV 104. Based on the request for the target information received from the GCS 202, the leader UAV 104 may determine the target information that may indicate a location of the target to be captured. The circuitry 204 of the GCS 202 may further receive the determined target information from the leader UAV 104. In another embodiment, the target information (for example, an identification and/or location of the target) may be determined by the circuitry 204 based on the user input received from the user or the human controller associated with the GCS 202. Based on the target information, the UAVs in the plurality of UAVs (i.e. including the leader UAV 104 and the plurality of follower UAVs 106) may be configured to follow the target and capture images and/or video of the target. In an example, the target may be an object in motion that may be followed by the plurality of UAVs in a certain formation. The formation may be determined based on the formation information. Details of the target information are further provided, for example, in FIGs. 6A, 6B, and 6C.

At 408, formation information may be determined. In an embodiment, the circuitry 204 of the GCS 202 may be configured to determine the formation information for the plurality of UAVs. In an embodiment, the formation information may be determined based on the determined geo-location of the leader UAV 104. In an embodiment, the determination of the formation information may be further based on the received user request (including user inputs about the formation of the plurality of UAVs). In other words, the formation information may be determined based on the receipt of the user inputs provided by the user or the human controller of the GCS 202. The formation information may include details of a position of the leader UAV 104 and a relative position of each of the follower UAVs 106A-106N with respect to the leader UAV 104 or the target (shown in FIGs 6A-6C). For example, the formation information may indicate the position of each of the plurality of follower UAVs 106 to form a particular swarm arrangement. The position of each of the plurality of UAVs may be an explicit XYZ position or the relative position with respect to current position, geo-location, and/or IMU data related to the leader UAV 104. For example, the formation information for the plurality of follower UAVs 106 may indicate, but is not limited to, a distance, an angle, or an orientation in relation to the position and/or orientation of the leader UAV 104 or the target. For example, the distance of each of the plurality of follower UAVs 106 may be same from the leader UAV 104, such that each of the plurality of follower UAVs 106 may be equidistant from the position of the leader UAV 104. The angle indicated by the formation information may correspond to an angle between each of the plurality of follower UAVs 106 and the leader UAV 104. Therefore, based on the real-time change in the position/IMU data of the leader UAV 104 or the target, the circuitry 204 of the GCS 202 may automatically determine or update the XYZ position, angle and/or orientation of each of the plurality of follower UAVs 106 in the formation information, such that the formed swarm arrangement of the plurality of UAVs may remain same or the distance between each of the plurality of follower UAVs 106 and the leader UAV 104 (or angle between each follower UAV and the leader UAV) may remain fixed. This may further achieve consistent swarm arrangement by the plurality of UAVs during the defined flight path, irrespective of any motion (or change in angle or orientation) of the leader UAV 104 or the target captured by the plurality of UAVs; or without any human intervention. Further details of the determination of the formation information and certain swarm arrangements are provided, for example, in FIGs. 5A, 5B, and 5C.

At 410, the determined formation information may be transmitted. In an embodiment, the circuitry 204 of the GCS 202 may be configured to transmit the determined formation information directly to each of the leader UAV 104 and the plurality of follower UAVs 106. The transmitted formation information may include relative positions, for example, a distance between each of the plurality of follower UAVs 106 and the leader UAV 104 (or the target), an altitude of each of the plurality of follower UAVs 106 with respect to the leader UAV 104 (or the target), an orientation of each of the plurality of follower UAVs 106 with respect to the leader UAV 104 (or the target). Based on the formation information received by each UAV in the plurality of UAVs, a required formation (or swarm arrangement) of the plurality of UAVs may be created around the target for the capture of images/videos of the target, as required by the user or for any different purposes (for example, but is not limited to, entertainment-related, surveillance-related, sports-related, education-related, or health-related). Each of the plurality of UAVs (i.e. using an in-built image capturing device) may be configured to capture images or video streams of the predefined target and transmit the captured images or video streams to the GCS 102.

In an embodiment, each of the plurality of follower UAVs 106 may be configured to directly receive the transmitted formation information from the GCS 202 (i.e. not via the leader UAV 104). In certain conventional solutions, the follower UAV may receive formation information from a Ground Control Station (GCS), via a leader UAV or related device, which may lead to a time lag in the transmission of the formation information or other instructions between the GCS and follower UAVs. In contrast, the disclosed GCS 202 may directly transmit the determined formation information to each of the plurality of follower UAVs 106, via the communication network 108 (i.e. shown in FIG. 1) to minimize any transmission delay between the GCS 202 and the plurality of follower UAVs 106. Such minimization in the transmission delay may further provide lower latency and better and/or real-time control of the plurality of follower UAVs 106 based on any change in the leader UAV 104 (or the target), or based on any predefined requirement to form a particular swarm or pattern of the plurality of UAVs.

In an embodiment, based on the receipt of the formation information, each of the plurality of follower UAVs 106 may further adjust a position of the corresponding follower UAV of the plurality of follower UAVs 106 based on the received formation information. The adjustment of the positions (i.e. XYZ positions) of the plurality of follower UAVs 106 may be performed to dynamically form or adjust the swarm arrangement in light of any change in position (or geo-location) or angle/orientation of the leader UAV 104. The adjustment of the position (or angle or orientation) of a UAV (e.g., a follower UAV) based on the formation information is described further, for example, in FIGs. 5A, 5B, and 5C. In an embodiment, the determined formation information may further indicate changes in a direction for the leader UAV 104 and each of the plurality of follower UAVs 106. The precise changes in the direction or orientation of the leader UAV 104 may be determined at the leader UAV 104 by the IMU data (i.e. using IMU 318). Based on the IMU data received from the leader UAV 104, the formation information may include information related to change in direction or orientation for each of the plurality of follower UAVs 106 as per predefined swarm arrangement, flight path, or target to be captured. For example, the formation information may indicate that the leader UAV 104 and the plurality of follower UAVs 106 are to be in a straight line as illustrated, for example, in FIG. 5A. It should be noted that some of the operations from 402 to 410 may be automatically repeated to change the formation of the plurality of UAVs around the selected target, based on a change in the user inputs regarding a swarm (or pattern) to be formed by the plurality of UAVs (i.e. leader UAV 104 and the plurality of follower UAVs 106) or based on a movement of the leader UAV 104 or the target. The user inputs may be included in a formation request (or the user request) provided by the user or human controller of the GCS 202 or the plurality of UAVs.

FIGs. 5A, 5B, and 5C are diagrams that illustrate exemplary scenarios of unmanned aerial vehicle swarm control, in accordance with an embodiment of the disclosure. FIGs. 5A, 5B, and 5C are explained in conjunction with elements from FIG. 1, FIG. 2, FIG. 3, and FIG. 4.

With reference to FIG. 5A, there is shown an exemplary first scenario 500A. The first scenario 500A includes a plurality of UAVs which may include a leader UAV 502 and a plurality of follower UAVs 504A-504D in a certain formation. A GCS (such as GCS 202 shown in FIG. 2) may be configured to determine a geo-location (or current position) of the leader UAV 502 and further configured to determine formation information based on the determined geo-location of the leader UAV 502. The formation information may indicate at least a relative position for each of the plurality of follower UAVs 504A-504D with respect to the leader UAV 502. The GCS 202 may be further configured to transmit the determined formation information directly to each of the leader UAV 502 and the plurality of follower UAVs 504A-504D. Each of the plurality of follower UAVs 504A-504D may be further configured to receive the transmitted formation information, and adjust a position of the corresponding UAV, based on the received formation information. For example, as illustrated in FIG. 5A, initially each of the plurality of follower UAVs 504A-504D may be at same distance from the leader UAV 502 (say to form an arc formation around the leader UAV 502). Based on the geo-location of the leader UAV 502 and/or based on the user request, the formation information may be updated such that the plurality of UAVs including the leader UAV 502 and the follower UAVs 504A-504D forms a straight-line formation as shown, for example, in FIG. 5A. Based on receipt of such formation information by each of the leader UAV 502 and the plurality of follower UAVs 504A-504D, one or more of the leader UAV 504 and the plurality of follower UAVs 504A-504D may adjust their positions. The adjustment of the positions of one or more UAVs of the plurality of UAVs may be performed, such that the plurality of UAVs may attain the desired formation. For example, the plurality of UAVs may attain a straight-line formation as the desired formation which may be predefined or indicated by the user inputs received from the user of the GCS 202. In other words, the XYZ position of each of the follower UAVs 504A-504D and the position of the leader UAV 502 may lie on a straight line after the adjustment of positions of the follower UAVs 504A-504D with respect to the leader UAV 502 as shown, for example, in FIG. 5A. In such straight-line formation, the distance between adjacent UAVs of the plurality of UAVs may be same as per the desired formation. Further, based on any change in position (geo-location) of the leader UAV 502, the circuitry 204 of the GCS 202 may dynamically change the formation information for the plurality of follower UAVs 504-504D to adjust the positions for each of the plurality of follower UAVs 504-504D to maintain the straight-line formation or swarm arrangement of the plurality of UAVs (including the leader UAV 502 and the plurality of follower UAVs 504A-504D). It may be noted that four follower UAVs and the straight-line formation shown in FIG. 5A, is presented merely as example. The formation may include N number of follower UAVs to form different formation patterns in light of the leader UAV as per the requirement, without a deviation from the scope of the disclosure.

With reference to FIG. 5B, there is shown an exemplary second scenario 500B. The second scenario 500B includes a plurality of UAVs comprising a leader UAV 506 and a plurality of follower UAVs 508A-508E in a certain formation (for example an arc formation as initial or current formation). The GCS 202 may be configured to determine a geo-location of the leader UAV 506 and determine the formation information based on the determined geo-location, as described, for example, in FIGs. 4 and 5A. The GCS 202 may also determine the formation information for the plurality of follower UAVs 508A-508E based on the user inputs which may indicate a change in the formation. For example, the formation information may indicate that the leader UAV 506 and the plurality of follower UAVs 508A-508E are to form a circular formation with the leader UAV 506 at the centre of the circular formation (i.e. indicated in the user inputs or formed based on current position of the leader UAV 506 or formed based on a specific location of a target to be captured by the plurality of follower UAVs 508A-508E and the leader UAV 506). The GCS 202 may further transmit the formation information directly to each UAV in the plurality of UAVs including the leader UAV 506 and the plurality of follower UAVs 508A-508E. Based on the receipt of the formation information, each of the plurality of follower UAVs 508A-508E may be configured to adjust a position (or angle or orientation) of the corresponding UAV with respect to the leader UAV 506. Based on the adjustment of the positions, the plurality of UAVs may attain, for example, the circular formation. For example, as shown in FIG. 5B, the plurality of UAVs in the circular formation may include the leader UAV 506 at the centre of the circular formation and include the plurality of follower UAVs 508A-508DE which may lie around the centre i.e. each of the plurality of follower UAVs 508A-508E may lie on a circumference of the circular formation with the leader UAV 506 positioned at the center of the circular formation, based on the adjustment of the positions of the plurality of follower UAVs 508A-508E with respect to the leader UAV 506.

With reference to FIG. 5C, there is shown an exemplary third scenario 500C. The third scenario 500C includes a plurality of UAVs which may include a leader UAV 510 and a plurality of follower UAVs 512A-512D in a certain formation (for example an arc formation as initial or current formation). The GCS 202 may be configured to determine a geo-location of the leader UAV 510 and determine the formation information based on the determined geo-location and/or the user inputs (i.e. included in the formation request), as described, for example, in FIGs. 4 and 5A. For example, based on the user inputs (i.e. specific to a particular formation, or based on the target location, or based on the current position of the leader UAV 510), the GCS 202 may update the formation information to indicate that the leader UAV 510 and the plurality of follower UAVs 512A-512D are to form a triangular formation, as shown, for example, in FIG. 5C. The GCS 202 may further transmit the updated formation information directly to the leader UAV 510 and the plurality of follower UAVs 512A-512D. Based on the receipt of the formation information, each of the plurality of follower UAVs 512A-512D may be configured to adjust a position of the corresponding UAV with respect to the leader UAV 510. Based on the adjustment of the position, the plurality of UAVs may attain, for example the triangular or arrow-head formation. For example, as shown in FIG. 5C, the plurality of UAVs in the triangular or arrow-head formation may include the leader UAV 510 at a head position of the arrow-head formation, and the plurality of follower UAVs 512A-512D at trail positions on either sides of the arrow-head formation, based on the adjustment of the positions of the plurality of follower UAVs 512A-512D with respect to the leader UAV 510.

In an embodiment, the circuitry 204 of the GCS 202 may be configured to dynamically determine the formation information for each of the plurality of follower UAVs (for example, the follower UAVs 504A-504D, or the follower UAVs 508A-508E, or the follower UAVs 512A-512E) based on the formation request (i.e. user inputs) and/or the determined geo-location or IMU data of the leader UAV (for e.g., the leader UAV 502, or the leader UAV 506, or the leader UAV 510, respectively). The circuitry 204 may be further configured to directly transmit the determined formation information to the leader UAV (for e.g., the leader UAV 502, or the leader UAV 506, or the leader UAV 510) and each of the plurality of follower UAVs (for example, the follower UAVs 504A-504D, or the follower UAVs 508A-508E, or the follower UAVs 512A-512D, respectively).

In an embodiment, the plurality of UAVs may need to travel a predefined path while maintaining a particular formation which may be either predefined or formed based on the user inputs. In such cases, the formation information may indicate at least one of a geographical starting point for each of the plurality of UAVs, a geographical ending point for each of the plurality of UAVs, one or more altitude positions for each of the plurality of UAVs along a flight path, a series of intermediate geographical positions or waypoints in the flight path, a separation distance between adjacent UAVs of the plurality of UAVs, or information about one or more speeds or velocities of the plurality of UAVs at corresponding waypoints. For example, the geographical starting point of a UAV may indicate a position or geo-location (such as, GPS co-ordinates) from which the UAV may start a flight or take-off, while the geographical ending point may indicate a position or geo-location at which the UAVs may be required to end the flight (or land) or to be finally positioned to capture the target for a particular duration. The one or more altitude positions for the UAV may indicate a set of heights from a ground-level at which the UAV may be required to fly along a certain flight path (or a flight trajectory). The series of intermediate geographical positions or waypoints for the UAV may indicate a set of geo-locations (such as, GPS co-ordinates) that the UAV may be required to reach in the flight path of the UAV. The separation distance between adjacent UAVs may be a minimum distance that each UAV may be required to maintain from other UAVs (e.g., nearby UAVs) in the flight path. This may be required to avoid collision among the UAVs during the flight path. The information about one or more speeds or velocities of the plurality of UAVs at corresponding waypoints may indicate a range of required speeds and velocity vectors to be maintained by each UAV at different geo-locations (or waypoints) in the flight path. Different information about the starting/ending positions, altitudes, intermediate geographical positions, and speed/velocity in the formation information may ensure to maintain a consistent formation by the plurality of UAVs during the flight path (i.e. without a need for complex computer vision techniques). In an embodiment, the circuitry 204 of the GCS 202 is further configured to directly transmit the formation information (i.e. determined for each UAV) to each of the plurality of follower UAVs (i.e., the follower UAVs 504A-504D, or the follower UAVs 508A-508E, or the follower UAVs 512A-512D) and the leader UAV (i.e., the leader UAV 502, or the leader UAV 506, or the leader UAV 510, respectively) at a predetermined frequency. For example, the predetermined frequency may be, but is not limited to, in milliseconds, seconds, or minutes. Based on the predetermined frequency, the circuitry 204 of the GCS 202 may determine the change in position or IMU data of the leader UAV 104 (or the target) and accordingly determine or update the formation information for the plurality of follower UAVs 106. In an embodiment, the predetermined frequency may be, but is not limited to, 10 Hz or 20 Hz.

In an embodiment, the GCS 202 may be configured to receive target information from the leader UAV (for example, the leader UAV 502). The target information may indicate a location or position of the target to be captured by the plurality of UAVs. In an example, the leader UAV may determine the target information based on a user input or by an application of one or more machine learning and image processing techniques applied on a set of images of the target captured by the leader UAV. In such case, the target may be an object (for example, but is not limited to, a particular person, an animal, an event, a vehicle, a building, etc) which may be recognized by the leader UAV using the application of the one or more machine learning and image processing techniques on the set of images of the target. The leader UAV 104 may further determine the current location or position of the recognized target in a three-dimension real space, include the determined location or position of the target in the target information, and further transmit the target information to the GCS 202. In some embodiments, the GCS 202 may be configured to directly recognize a particular target, determine the related position of the recognized target, and generate the target information. The GCS 202 may be further configured to determine the formation information for the plurality of UAVs based on the received or determined target information. The formation information determined based on the target information may indicate the XYZ positions, angle, or orientation of each of the plurality of UAVs based on the current position (or posture) of the target to be captured. The formation information for each of the plurality of UAVs may be determined such that an appropriate and high-quality 2D or 3D images of the target may be captured by the formation of the plurality of UAVs. The GCS 202 may be further configured to transmit the determined formation information to each of the plurality of follower UAVs (for example, follower UAVs 504A-504N). Each of the plurality of follower UAVs may be configured to control an in-built image capturing device (e.g., the image capturing device 308) based on the target information in the received formation information. For example, a follower UAV of the plurality of UAVs may adjust one or more camera parameters (such as, but is not limited to, a focal length, an aperture, a zoom, a tilt, or a field-of-view) associated with the image capturing device, to further capture the images or videos of the target. Such one or more camera parameters may be included in the formation information determined for each of the plurality of follower UAVs 106 and/or the leader UAV 104. Such camera parameters may be determined based on the position of the target and current positions or IMU data related to the leader UAV and the plurality of follower UAVs.

In an embodiment, the leader UAV (for example, the leader UAV 502 shown in FIG. 5A) and the plurality of follower UAVs (for example, follower UAVs 504A-504N shown in FIG. 5A) may be configured to maintain their relative positions and the created formation until a particular task (e.g., image/video capture task) assigned to the corresponding UAVs is completed or alternatively until a new command (e.g., updated formation information) may be received by the leader UAV and/or the plurality of follower UAVs from the GCS 202. In another, embodiment, the leader UAV and the plurality of follower UAVs may be configured to maintain their relative positions and the created formation independent of any change in positions (or IMU data) related to the target or the leader UAV (i.e. without a need for complex computer vision techniques). Further, based on the receipt of the new command. the leader UAV and the plurality of follower UAVs may be configured to dynamically change the formation (i.e. position, angle, orientation, or camera parameters) based on the updated formation information. For example, the updated formation information may be transmitted by the GCS 202 to the leader UAV and the plurality of follower UAVs at the pre-determined frequency. Thus, the UAVs in the plurality of UAVs may adjust their positions (or angle, or orientation, or imaging parameters) based on the updated formation information received at the pre-determined frequency.

It should be noted that the first scenario 500A, the second scenario 500B, and the third scenario 500C of FIGs. 5A, 5B, and 5C are presented merely as an example and should not be construed as limiting for the disclosure. Various other formations may be possible and all such formations fall within the scope of the present disclosure. For sake of brevity only five UAVs or six UAs are illustrated in FIGs. 5A, 5B and 5C, and it should be obvious to one skilled in the art that the number of UAVs may be based on a type of task that may be executed by the plurality of UAVs.

FIGs. 6A, 6B, and 6C are diagrams that illustrate exemplary scenarios for unmanned aerial vehicle swarm control using an electronic device, in accordance with an embodiment of the disclosure. FIGs. 6A, 6B, and 6C are explained in conjunction with elements from FIG. 1, FIG. 2, FIG. 3, FIG. 4, FIG. 5A, FIG. 5B, and FIG. 5C.

With reference to FIG. 6A, there is shown an exemplary first scenario 600A. The first scenario 600A may include a target object 602 (i.e. target), an automobile 604, a plurality of follower UAVs 606A-606N, an electronic device 608 associated with, used inside, or integrated in the automobile 604. For example, as shown in FIG. 6A, the target object 602 may be a cycle ridden by a person. The automobile 604 may follow or in proximity to the target object 602 (for example, during a cycling race event) and the electronic device 608 may function as a leader UAV (for example, the leader UAV 104). In some embodiments, the automobile 604 may have one or more functionalities of the leader UAV 104. In such case, the electronic device 608 may be integrated in a processing system (like an electronic control device (ECU)) of the automobile 604. The plurality of follower UAVs 606A-606N may be configured to follow the electronic device 608 (and/or the automobile 604) in a certain formation with respect to the electronic device 608 (and/or the automobile 604) to capture images/videos of the target object 602. A location of the target object 602 may be at an offset distance (i.e. 'D' as shown in FIGs. 6A-6C) from a location of the automobile 604 (or from a location of the electronic device 608). In an embodiment, the offset distance may be in, but is not limited to, centimeters, meters, feets, or yards.

In an embodiment, the electronic device 608 may be communicably coupled to each of the plurality of follower UAVs 606A-606N. The electronic device 608 may also operate as a GCS (for example, the GCS 102) and/or the leader UAV (such as the leader UAV 104). In such case, the electronic device 608 may include one or more processing functionalities of the GCS 202 and/or the leader UAV 104. Examples of the electronic device 608 may include, but is not limited to, a computing device, a mobile phone, an onboard processing integrated circuit (IC), a computer workstation, a controller system, a personal digital assistant (PDA), a smartphone, a cellular phone, a camera device, a gaming device, a server, a distributed computing system, or any electrical/electronic device with imaging, computation and communication capabilities. In an embodiment, the electronic device 608 may be a wearable device as described, for example, in FIG. 6C.

The electronic device 608 may include circuitry (not shown) that may be configured to determine target information which may indicate the location of a target (e.g., the target object 602) to be captured. The location of the target object 602 may be at an offset distance from the location of the electronic device 608. In an embodiment, the target information may be predefined. For example, the target object 602 may be at a predefined distance (i.e. in certain feets, meters, or yards) from the electronic device 608 or from the automobile 604 on which the electronic device 608 may be located. In another embodiment, the circuitry of the electronic device 608 may periodically capture one or more images of the target object 602 to determine the position (or distance from the electronic device 608) of the target object 602 based on different image processing techniques to further determine the target information on real-time basis. Thus, any real-time change in the location of the target object 602 (or distance between the target object 602 and the electronic device 608) may be updated in the target information. In some embodiments, the electronic device 608 may receive the captured images of the target object 602 from different imaging device (not shown) and the target object 602 may be included in a field-of-view (FOV) of the imaging device.

The circuitry of the electronic device 608 may be further configured to determine formation information for the plurality of follower UAVs 606A-606N. The formation information may indicate at least a relative position for each of the plurality of follower UAVs 606A-606N with respect to the location of the electronic device 608 or with respect to the location of the target object 602. The circuitry in the electronic device 608 may be further configured to transmit the determined formation information and the target information directly to each of the plurality of follower UAVs 606A-606N. Each of the plurality of follower UAVs 606A-606N may be further configured to receive the transmitted formation information and the target information. Based on the received formation information and the target information, each of the plurality of follower UAVs 606A-606N may be configured to adjust a position (or angle or orientation or imaging parameters of an inbuilt imaging device) of the corresponding UAV with respect to the electronic device 608 or the target object 602. The formation information transmitted to each of the plurality of follower UAVs 606A-606N may include, but is not limited to, relative XYZ position of each UAV with respect to the target object 602 (or the electronic device 608), information about angle or orientation for each UAV with respect to the target object 602 (or the electronic device 608), imaging parameters, information about flight path, starting/ending geo-coordinates as described, for example, in FIG. 4 and 5A-5C. In an embodiment, the electronic device 608 may be integrated in (or located on) the target object 602, such that the positions of the target object 602 and the electronic device 608 may be same.

In an embodiment, each of the plurality of follower UAVs 606A-606N may include an image capturing device (such as, image capturing device 308). A field-of-view (FOV) of the image capturing device may be controlled based on the received target information. For example, the target information may include information associated with the location of the target object 602 and/or the offset distance between the target object 602 and the electronic device 608. Based on the information associated with the location and the offset distance, each follower UAV from the plurality of follower UAVs 606A-606N may adjust the FOV of the image capturing device (e.g., the image capturing device 308) associated with the corresponding follower UAV to capture an image/video of the target object 602. Information about the FOV may be included in the formation information or in the target information as one of the imaging parameters related to each follower UAV. In an embodiment, the electronic device (e.g., the electronic device 608) may be associated with an automobile (for example, as shown in FIG. 6A), may be a portable electronic device (for example, as shown in FIGs. 6B and 6C) or may be a wearable device (for example, as shown in FIG. 6C), wherein the wearable device may also include clothing.

With reference to FIG. 6B, there is shown an exemplary second scenario 600B. The second scenario 600B may include one or more target objects 612, a person 614, a plurality of follower UAVs 616A-616N, a mobile device 610 associated with, or operated by the person 614. For example, as shown in FIG. 6B, the one or more target objects 612 may be a group of individuals who may be contestants in a race (or a marathon) or may be certain actors located in a film studio. The person 614 may follow one or more target objects 612 and the mobile device 610 may function as the electronic device 608 (in FIG. 6A) or with certain functionalities of a leader UAV (for example, the leader UAV 104) or the GCS 202. For example, the person 614 may a director or a camera man of a movie scene (i.e. which may include one or more target objects 612) and may want to capture images of one or more target objects 612 from different angles or perspectives by the plurality of follower UAVs 616A-616N based on the position of the movement of one or more target objects 612 or based on movement of the person 614 (or the mobile device 610) with respect to one or more target objects 612. For example, the director or the camera man of the movie scene who may be holding the mobile device 610 and may want to move around the one or more target objects 612, such that the plurality of follower UAVs 616A-616N may accordingly move (or adjust their corresponding angles or orientations) to capture the images/video from different angles and locations. Thus, the plurality of follower UAVs 616A-616N may be configured to follow the mobile device 610 and/or the person 614 in a certain formation with respect to the mobile device 610 and/or the person 614 to capture images/videos of one or more target objects 612. The plurality of follower UAVs 616A-616N (and inbuilt imaging device) may be controlled to form certain formation with respect to the mobile device 610 and/or the person 614, and capture the appropriate images/video of one or more target objects 612 in a manner similar to that described, for example, in FIG. 6A. In case of any change in position, angle, or orientation of the person 614 (or the mobile device 610), the mobile device 610 may measure the real-time position or the IMU data (i.e. using inbuilt GPS or IMU sensor) of the person 614 (or the mobile device 610), further update the formation information and/or the target information for the plurality of follower UAVs 616A-616N, and directly transmit the updated formation information to each of the plurality of follower UAVs 616A-616N to capture the images/video one or more target objects 612 appropriately. Thus, using the mobile device 610 and the plurality of follower UAVs 616A-616N, the person 614 may dynamically control the capture of one or more target objects 612 from different angles or positions on real-time basis, based on a change in the position and/or IMU data related to the person 614 and/or the mobile device 610 (i.e. as the electronic device). Thus, the person 614 may not need to manually control the positions and/or angles/orientations of the plurality of follower UAVs 616A-616N, in case of any change in positions/angle/orientation of one or more target objects 612 and/or the person 614.

With reference to FIG. 6C, there is shown an exemplary third scenario 600C. The third scenario 600C may include one or more target objects 618, a person 620, a plurality of follower UAVs 622A-622N, a wearable device 624 associated with, worn by, or operated by the person 620. For example, as shown in FIG. 6C, the person 620 may follow one or more target objects 618 (as described, for example, in FIG. 6B) and the wearable device 624 (such as, a smart watch, a portable digital assistant, an electronic headset, a head mounted device, or a smart cloth) may function as the electronic device 608 or a leader UAV (for example, the leader UAV 104). The plurality of follower UAVs 622A-622N may be configured to follow the wearable device 624 and/or the person 620 in a certain formation with respect to the wearable device 624 and/or the person 620 to capture images/videos of one or more target objects 618. The plurality of follower UAVs 622A-622N may be controlled to form certain formation (or swarm pattern) with respect to the wearable device 624 and/or the person 620, and capture the appropriate images/video of one or more target objects 618 in a manner similar to that described, for example, in FIGs. 6A and 6B.

It may be noted that the first scenario 600A, the second scenario 600B, and the third scenario 600C of FIGs. 6A, 6B, and 6C, respectively, are presented merely as an example and should not be construed as limiting for the disclosure. Various other formation may be possible, and all such formation fall within the scope of the present disclosure. In accordance with the embodiments of the present disclosure, the plurality of UAVs including a leader UAV (or the disclosed electronic device) and a plurality of follower UAVs may follow a target object (i.e. target) based on the formation information and may be configured to dynamically change the formation based on real-time changes (i.e. in position, IMU, or user inputs related to the leader UAV, the electronic device, or the target object), without any human intervention.

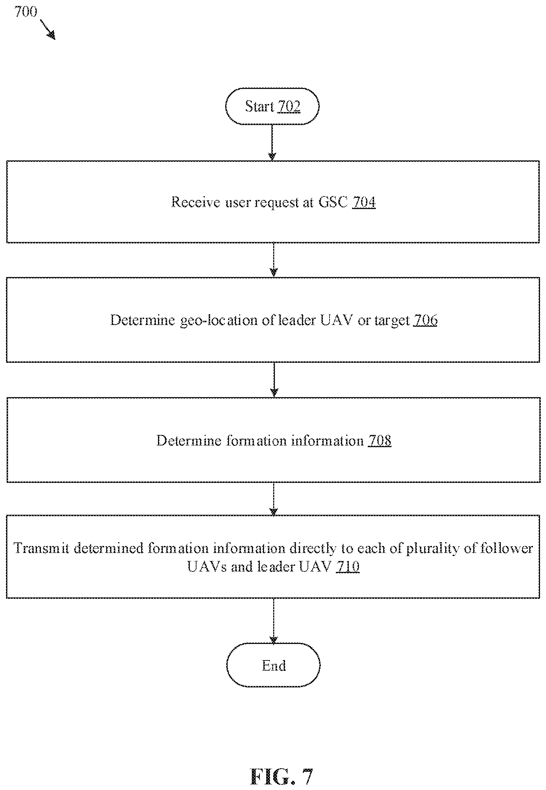

FIG. 7 is a flowchart that illustrates an exemplary method for unmanned aerial vehicle swarm control, in accordance with an embodiment of the disclosure. With reference to FIG. 7, there is shown a flowchart 700. The flowchart 700 of FIG. 7 is explained in conjunction with elements from FIG. 1, FIG. 2, FIG 3, FIG. 4, FIG. 5A, FIG. 5B, FIG. 5C, FIG. 6A, FIG. 6B, and FIG. 6C. The operations of the flowchart 700 may be executed by a computing system, such as, the system 100, the GCS 202, or the circuitry 204. The operations may start at 702 and proceed to 704.

At 704, the user request may be received at the GCS 202. In an embodiment, the circuitry 204 may be configured to receive the user request at the GCS 202. The user request may be for a plurality of UAVs including the leader UAV 104 and the plurality of follower UAVs 106. The user request may include, but is not limited to, one or more instructions for the plurality of UAVs to form a particular formation, one or more instructions for the plurality of UAVs to follow a certain target in a particular formation and capture images/videos of the target, or defined roles for the plurality of UAVs. Different exemplary formations for which input may be provided in the form of the user request or automatically formed are described, for example, in FIGs 4, 5A, 5B, and 5C.

At 706, the geo-location of the leader UAV 104 may be determined. In an embodiment, the circuitry 204 may be configured to determine the geo-location of the leader UAV 104. The geo-location may refer to the geographical (e.g., latitudinal, longitudinal, and/or altitudinal) location of the leader UAV 104. The determination of the geo-location of the leader UAV 104 is described further, for example, in FIG. 4. In some embodiments, the circuitry 204 may be configured to determine the geo-location of the target object (i.e. shown in FIGs. 6A-6C).

At 708, the formation information may be determined based on the determined geo-location of the leader UAV 104, the received user request, or the geo-location of the target object. In an embodiment, the circuitry 204 may be configured to determine the formation information based on the geo-location of the leader UAV 104, the received user request, or the target object. The formation information may indicate at least a relative position for each of the plurality of follower UAVs 106 with respect to the leader UAV 104 in the plurality of UAVs. The formation information may be dynamically determined or updated for each of the plurality of follower UAVs 106 based on the formation request (i.e. user request) provided by the user, the determined geo-location of the leader UAV 104 (or the target to be captured) or based on the change in the IMU data with respect to the leader UAV 104 and the target object. The determination of the formation information is described, for example, in FIGs. 4, 5A, 5B, and 5C.

At 710, the determined formation information may be transmitted. In an embodiment, the circuitry 204 may be configured to directly transmit the determined formation information to each of the plurality of follower UAVs 106 and the leader UAV 104 in the plurality of UAVs. The formation information may be transmitted to initiate the creation of a required formation of the plurality of UAVs, for example, around the target object. In an embodiment, each of the plurality of follower UAVs 106 may be configured to receive the formation information directly from the GCS 202 and adjust a position of the corresponding follower UAV with respect to the leader UAV 104 based on the received formation information. Thus, based on the formation information, each of the plurality of UAVs may automatically organize itself into a formation (as discussed, for example, in FIGs. 5A, 5B, and 5C), and may follow the target object in a defined direction and/or orientation. In an embodiment, if the formation information is updated based on the user request or based on change in the position/IMU data of the leader UAV 104 (or the target object), the updated formation information may be transmitted directly to the leader UAV 104 and the plurality of follower UAVs 106. Based on the updated formation information, the plurality of UAVs may be dynamically re-organized on the real-time basis to a new formation or change position/angle/orientation (i.e. while maintaining the same formation) as described, for example, in FIGs. 5A-5C and 6A-6C. Control may pass to end.

Although the flowchart 700 is illustrated as discrete operations, such as, 704, 706, 708, and 710, the disclosure may not be so limited. Accordingly, in certain embodiments, such discrete operations may be further divided into additional operations, combined into fewer operations, or eliminated, depending on the particular implementation without detracting from the essence of the disclosed embodiments.

Various embodiments of the disclosure may provide a non-transitory computer-readable medium and/or storage medium having stored thereon, instructions executable by a machine and/or a computer (for example the Ground Control Station 202). The instructions may cause the machine and/or computer to perform operations that may include reception of a user request for a plurality of Unmanned Arial Vehicles (UAVs) including a leader UAV (such as the leader UAV 104) and a plurality of follower UAVs (such as the plurality of follower UAVs 106). The operations may further include determination of a geo-location of the leader UAV. The operations may further include determination of formation information based on the determined geo-location of the leader UAV and the received user request. The formation information may indicate at least a relative position for each of the plurality of follower UAVs with respect to the leader UAV. The operations may further include transmission the determined formation information directly to each of the plurality of follower UAVs. Each of the plurality of follower UAVs may further receive the transmitted formation information and adjust a position based on the received formation information.

Various embodiments of the disclosure may provide an exemplary system (e.g., the system 100) for UAV swarm control. The system 100 may include a plurality of UAVs including a leader UAV (e.g., the leader UAV 104) and a plurality of follower UAVs (e.g., the plurality of follower UAVs 106) communicably coupled with the leader UAV 104. The system 100 may further include a GCS (e.g., the GCS 202) that may include circuitry (e.g., the circuitry 204). The circuitry 204 may be configured to determine a geo-location of the leader UAV 104. The circuitry 204 may be further configured to determine formation information based on the determined geo-location of the leader UAV 104. Herein, the formation information may indicate at least a relative position for each of the plurality of follower UAVs 106 with respect to the leader UAV 104 in the plurality of UAVs. The circuitry 204 may be further configured to transmit the determined formation information directly to each of the leader UAV 104 and the plurality of follower UAVs 106. Each of the plurality of follower UAVs 106 may be configured to receive the transmitted formation information, and adjust a position based on the received formation information.

In an embodiment, the circuitry 204 may be further configured to dynamically determine the formation information for each of the plurality of follower UAVs 106 based on a formation request (i.e. user request) and the determined geo-location of the leader UAV 104. The circuitry 204 may be further configured to transmit the determined formation information to the leader UAV 104 and each of the plurality of follower UAVs 106. In an embodiment, the formation information may further indicate at least one of, but is not limited to, a geographical starting point, a geographical ending point, one or more altitude positions for the plurality of UAVs along a flight path, a series of intermediate geographical positions or waypoints in the flight path, a separation distance between adjacent UAVs of the plurality of UAVs, or information about one or more speeds or velocities of the plurality of UAVs at corresponding waypoints.

In an embodiment, the leader UAV 104 of the plurality of UAVs may include an automobile. In an embodiment, the GCS 102 or the circuitry 204 may be further configured to transmit the formation information to each of the plurality of follower UAVs 106 and the leader UAV 104 at a predetermined frequency.

In an embodiment, the GCS 102 and/or circuitry 204 may be further configured to receive inertial measurement unit (IMU) data from the leader UAV 104. The GCS 102 and/or circuitry 204 may be further configured to determine the formation information based on the received IMU data. The determined formation information may further indicate changes in a direction for the leader UAV 104 and each of the plurality of follower UAVs 106.

In an embodiment, the leader UAV 104 and each of the plurality of follower UAVs 106 may include an image capturing device (for example, the image capturing device 308 of FIG. 3). The image capturing device 308 on each of the plurality of UAVs may be configured to capture images or video streams of a specified target or object, and transmit the captured image and/or video stream to the Ground control station (GCS) 202.

In an embodiment. the GCS 102 and/or the circuitry 204 may be further configured to receive target information from the leader UAV 104, wherein the target information may indicate a location of a target to be captured. Examples of the target are illustrated in FIGs. 6A, 6B, and 6C. The GCS 102 and/or the circuitry 204 may be further configured to determine the formation information based on the received target information, and transmit the determined formation information to each of the plurality of follower UAVs 106. Each of the plurality of UAVs 106 may be configured to control the image capturing device 308 based on the target information in the received formation information.

Various embodiments of the disclosure may provide an electronic device (e.g., the electronic device 608) that may include circuitry configured to determine target information, which may indicate a location of a target to be captured. The location of the target may be at an offset distance from a location of the electronic device 608. In an embodiment, the circuitry of the electronic device 608 may be configured to determine formation information for a plurality of follower Unmanned Aerial Vehicles (UAVs). The formation information may indicate at least a relative position for each of the plurality of follower UAVs with respect to the electronic device 608. In further embodiment, the electronic device 608 may be further configured to transmit the determined formation information and the target information directly to each of the plurality of follower UAVs. Each of the plurality of follower UAVs may be further configured to receive the transmitted formation information and the target information, and may further adjust a position based on the received formation information and the target information.

In an embodiment, each of the plurality of follower UAVs may include an image capturing device. A field-of-view (FOV) of the image capturing device may be controlled based on the received target information. In an embodiment, the electronic device may be a wearable device. In an embodiment, the electronic device may be integrated in an automobile

The present disclosure may be realized in hardware, or a combination of hardware and software. The present disclosure may be realized in a centralized fashion, in at least one computer system, or in a distributed fashion, where different elements may be spread across several interconnected computer systems. A computer system or other apparatus adapted to carry out the methods described herein may be suited. A combination of hardware and software may be a general-purpose computer system with a computer program that, when loaded and executed, may control the computer system such that it carries out the methods described herein. The present disclosure may be realized in hardware that includes a portion of an integrated circuit that also performs other functions.

The present disclosure may also be embedded in a computer program product, which includes all the features that enable the implementation of the methods described herein, and which, when loaded in a computer system, is able to carry out these methods. Computer program, in the present context, means any expression, in any language, code or notation, of a set of instructions intended to cause a system with an information processing capability to perform a particular function either directly, or after either or both of the following: a) conversion to another language, code or notation; b) reproduction in a different material form.

While the present disclosure has been described with reference to certain embodiments, it will be understood by those skilled in the art that various changes may be made, and equivalents may be substituted without deviation from the scope of the present disclosure. In addition, many modifications may be made to adapt a particular situation or material to the teachings of the present disclosure without deviation from its scope. Therefore, it is intended that the present disclosure is not limited to the particular embodiment disclosed, but that the present disclosure will include all embodiments falling within the scope of the appended claims.

## Claims

1. A system (100), comprising:
a plurality of Unmanned Aerial Vehicles, UAV, which include a leader UAV (104) and a plurality of follower UAVs (106) communicably coupled with the leader UAV; and
a Ground Control Station, GCS (102), which includes circuitry configured to:
determine a geo-location of the leader UAV;
determine formation information based on the determined geo-location of the leader UAV, wherein the formation information indicates at least a relative position for each of the plurality of follower UAVs with respect to the leader UAV; and
transmit the determined formation information directly to each of the leader UAV and the plurality of follower UAVs, wherein each of the plurality of follower UAVs is further configured to:
receive the transmitted formation information, and
adjust a position based on the received formation information.

2. The system according to claim 1, wherein the circuitry is further configured to:
dynamically determine the formation information for each of the plurality of follower UAVs based on a formation request and the determined geo-location of the leader UAV; and
transmit the determined formation information to the leader UAV and each of the plurality of follower UAVs.

3. The system according to claim 1, wherein the formation information further indicates at least one of a geographical starting point, a geographical ending point, one or more altitude positions for the plurality of UAVs along a flight path, a series of intermediate geographical positions or waypoints in the flight path, a separation distance between adjacent UAVs of the plurality of UAVs, or information about one or more speeds or velocities of the plurality of UAVs at corresponding waypoints.

4. The system according to claim 1, wherein the leader of the plurality of UAVs comprises an automobile.

5. The system according to claim 1, wherein the circuitry is further configured to transmit the formation information to each of the plurality of follower UAVs and the leader UAV at a predetermined frequency.

6. The system according to claim 1, wherein the circuitry is further configured to:
receive inertial measurement unit, IMU, data from the leader UAV; and
determine the formation information based on the received IMU data, wherein the determined formation information further indicates changes in a direction for the leader UAV and each of the plurality of follower UAVs.

7. The system according to claim 1, wherein each of the plurality of UAVs includes an image capturing device which is configured to capture images or video streams, and transmit the captured images or video streams to the Ground control station (GCS).

8. The system according to claim 7, wherein the circuitry is further configured to:
receive target information from the leader UAV, wherein the target information indicates a location of a target to be captured;
determine the formation information based on the received target information; and
transmit the determined formation information to each of the plurality of follower UAVs, wherein each of the plurality of follower UAVs is configured to control the image capturing device based on the target information in the received formation information.

9. The system according to claim 1, wherein the circuitry is further configured to:
receive a user request for the plurality of Unmanned Aerial Vehicles, UAVs, including the leader UAV and the plurality of follower UAVs.

10. The system according to claim 9, wherein the GSC is integrated with the leader UAV.

11. A method, comprising:
in a Ground Control Station, GSC (102):
receiving a user request for a plurality of Unmanned Aerial Vehicles, UAVs, including a leader UAV (104) and a plurality of follower UAVs (106);
determining a geo-location of the leader UAV;
determining formation information based on the determined geo-location of the leader UAV and the received user request, wherein the formation information indicates at least a relative position for each of the plurality of follower UAVs with respect to the leader UAV; and
transmitting the determined formation information directly to each of the plurality of follower UAVs, wherein each of the plurality of follower UAVs further:
receives the transmitted formation information, and
adjusts a position based on the received formation information.

12. An electronic device forming part of the system according to claim 1, wherein the electronic device is configured to operate as the leader UAV (104).

## Patentansprüche

1. System (100), umfassend:
eine Vielzahl von unbemannten Luftfahrzeugen, UAV, die ein Führungs-UAV (104) und eine Vielzahl von Folge-UAVs (106), die mit dem Führungs-UAV kommunikationsfähig gekoppelt sind, einschließen; und
eine Bodenkontrollstation, GCS (102), die eine Schaltung einschließt, die konfiguriert ist zum:
Bestimmen einer Geolokation des Führungs-UAV;
Bestimmen von Formationsinformationen basierend auf der bestimmten Geolokation des Führungs-UAV, wobei die Formationsinformationen mindestens eine relative Position für jedes der Vielzahl von Folge-UAVs in Bezug auf das Führungs-UAV angeben; und
direktes Übertragen der bestimmten Formationsinformationen an jedes der Führungs-UAV und der Vielzahl von Folge-UAVs, wobei jedes der Vielzahl von Folge-UAVs ferner konfiguriert ist zum:
Empfangen der übertragenen Formationsinformationen und
Anpassen einer Position basierend auf den empfangenen Formationsinformationen.

2. System nach Anspruch 1, wobei die Schaltung ferner konfiguriert ist zum:
dynamischen Bestimmen der Formationsinformationen für jedes der Vielzahl von Folge-UAVs basierend auf einer Formationsanforderung und der bestimmten Geolokation des Führungs-UAV; und
Übertragen der bestimmten Formationsinformationen an das Führungs-UAV und jedes der Vielzahl von Folge-UAVs.

3. System nach Anspruch 1, wobei die Formationsinformationen ferner mindestens eines von einem geografischen Startpunkt, einem geografischen Endpunkt, einer oder mehreren Höhenpositionen für die Vielzahl von UAVs entlang einer Flugroute, einer Reihe von geografischen Zwischenpositionen oder Wegpunkten in der Flugroute, einem Trennungsabstand zwischen angrenzenden UAVs der Vielzahl von UAVs oder Informationen über eine oder mehrere Geschwindigkeiten oder Schnelligkeiten der Vielzahl von UAVs an entsprechenden Wegpunkten angeben.

4. System nach Anspruch 1, wobei der Anführer der Vielzahl von UAVs ein Automobil umfasst.

5. System nach Anspruch 1, wobei die Schaltung ferner konfiguriert ist, um die Formationsinformationen mit einer vorbestimmten Frequenz an jedes der Vielzahl von Folge-UAVs und das Führungs-UAV zu übertragen.

6. System nach Anspruch 1, wobei die Schaltung ferner konfiguriert ist zum:
Empfangen von Daten einer Trägheitsmesseinheit, IMU, von dem Führungs-UAV; und
Bestimmen der Formationsinformationen basierend auf den empfangenen IMU-Daten, wobei die bestimmten Formationsinformationen ferner Richtungsänderungen für das Führungs-UAV und jedes der Vielzahl von Folge-UAVs angeben.

7. System nach Anspruch 1, wobei jedes der Vielzahl von UAVs eine Bilderfassungsvorrichtung einschließt, die konfiguriert ist, um Bilder oder Videoströme zu erfassen und die erfassten Bilder oder Videoströme an die Bodenkontrollstation (GCS) zu übertragen.

8. System nach Anspruch 7, wobei die Schaltung ferner konfiguriert ist zum:
Empfangen von Zielinformationen von dem Führungs-UAV, wobei die Zielinformationen einen Standort eines zu erfassenden Ziels angeben;
Bestimmen der Formationsinformationen basierend auf den empfangenen Zielinformationen; und
Übertragen der bestimmten Formationsinformationen an jedes der Vielzahl von Folge-UAVs, wobei jedes der Vielzahl von Folge-UAVs konfiguriert ist, um die Bilderfassungsvorrichtung basierend auf den Zielinformationen in den empfangenen Formationsinformationen zu steuern.

9. System nach Anspruch 1, wobei die Schaltung ferner konfiguriert ist zum:
Empfangen einer Benutzeranforderung für die Vielzahl von unbemannten Luftfahrzeugen, UAVs, einschließlich des Führungs-UAV und der Vielzahl von Folge-UAVs.

10. System nach Anspruch 9, wobei die GSC in das Führungs-UAV integriert ist.

11. Verfahren, umfassend:
in einer Bodenkontrollstation, GSC (102):
Empfangen einer Benutzeranforderung für eine Vielzahl von unbemannten Luftfahrzeugen, UAVs, einschließlich eines Führungs-UAV (104) und einer Vielzahl von Folge-UAVs (106);
Bestimmen einer Geolokation des Führungs-UAV;
Bestimmen von Formationsinformationen basierend auf der bestimmten Geolokation des Führungs-UAV und der empfangenen Benutzeranforderung, wobei die Formationsinformationen mindestens eine relative Position für jedes der Vielzahl von Folge-UAVs in Bezug auf das Führungs-UAV angeben; und
direktes Übertragen der bestimmten Formationsinformationen an jedes der Vielzahl von Folge-UAVs, wobei jedes der Vielzahl von Folge-UAVs ferner:
die übertragenen Formationsinformationen empfängt und
eine Position basierend auf den empfangenen Formationsinformationen anpasst.

12. Elektronische Vorrichtung, die Teil des Systems nach Anspruch 1 ist, wobei die elektronische Vorrichtung konfiguriert ist, um als das Führungs-UAV (104) in Betrieb zu sein.

## Revendications

1. Système (100), comprenant :
une pluralité de véhicules aériens sans pilote, UAV, qui comporte un UAV de tête (104) et une pluralité d'UAV suiveurs (106) couplés de manière communicable avec l'UAV de tête ; et
une station de contrôle au sol, GCS (102), qui comporte des circuits configurés pour :
déterminer la géolocalisation de l'UAV de tête ;
déterminer des informations de formation sur la base de la géolocalisation déterminée de l'UAV de tête, dans lequel les informations de formation indiquent au moins une position relative de chacun des UAV suiveurs par rapport à l'UAV de tête ; et
transmettre les informations de formation déterminées directement à chacun de l'UAV de tête et de la pluralité d'UAV suiveurs, dans lequel chacun de la pluralité d'UAV suiveurs est en outre configuré pour :
recevoir les informations de formation transmises, et
ajuster une position sur la base des informations de formation reçues.

2. Système selon la revendication 1, dans lequel la circuiterie est configurée en outre pour :
déterminer dynamiquement les informations de formation pour chacun de la pluralité d'UAV suiveurs sur la base d'une demande de formation et de la géolocalisation déterminée de l'UAV de tête ; et
transmettre les informations de formation déterminées à l'UAV de tête et à chacun de la pluralité des UAV suiveurs.

3. Système selon la revendication 1, dans lequel les informations de formation indiquent en outre au moins un point de départ géographique, un point d'arrivée géographique, une ou des positions d'altitude pour la pluralité d'UAV le long d'une trajectoire de vol, une série de positions géographiques intermédiaires ou de points de cheminement dans la trajectoire de vol, une distance de séparation entre les UAV adjacents de la pluralité d'UAV, ou des informations sur une ou des vitesses de la pluralité d'UAV à des points de cheminement correspondants.

4. Système selon la revendication 1, dans lequel le leader de la pluralité d'UAV comprend une automobile.

5. Système selon la revendication 1, dans lequel la circuiterie est en outre configuré pour transmettre les informations de formation à chacun de la pluralité d'UAV suiveurs et à l'UAV de tête à une fréquence prédéterminée.

6. Système selon la revendication 1, dans lequel la circuiterie est configurée en outre pour :
recevoir les données de l'unité de mesure inertielle, IMU, de l'UAV de tête ; et
déterminer les informations de formation sur la base des données IMU reçues, dans lequel les informations de formation déterminées indiquant en outre les changements de direction de l'UAV de tête et de chacun des UAV suiveurs.

7. Système selon la revendication 1, dans lequel chacun de la pluralité d'UAV comporte un dispositif de capture d'images configuré pour capturer des images ou des flux vidéo et transmettre les images ou les flux vidéo capturés à la station de contrôle au sol, GCS.

8. Système selon la revendication 7, dans lequel la circuiterie est configurée en outre pour :
recevoir des informations sur la cible de la part de l'UAV de tête, dans lequel les informations sur la cible indiquent l'emplacement d'une cible à capturer ;
déterminer les informations relatives à la formation sur la base des informations reçues sur la cible ; et
transmettre les informations de formation déterminées à chacun de la pluralité d'UAV suiveurs, dans lequel chacun de la pluralité d'UAV suiveurs est configuré pour contrôler le dispositif de capture d'images sur la base des informations de cible contenues dans les informations de formation reçues.

9. Système selon la revendication 1, dans lequel la circuiterie est configurée en outre pour :
recevoir une demande de l'utilisateur pour la pluralité de véhicules aériens sans pilote, UAV, y compris l'UAV de tête et la pluralité d'UAV suiveurs.

10. Système selon la revendication 9, dans lequel le GSC est intégré à l'UAV de tête.

11. Procédé, comprenant :
dans une station de contrôle au sol, GSC (102) :
la réception d'une demande d'utilisateur pour une pluralité de véhicules aériens sans pilote, UAV, y compris un UAV de tête (104) et une pluralité d'UAV suiveurs (106) ;
la détermination de la géolocalisation de l'UAV de tête ;
la détermination des informations de formation sur la base de la géolocalisation déterminée de l'UAV de tête et de la demande reçue de l'utilisateur, dans lequel les informations de formation indiquent au moins une position relative de chacun de la pluralité d'UAV suiveurs par rapport à l'UAV de tête ; et
la transmission des informations de formation déterminées directement à chacun de la pluralité d'UAV suiveurs, dans lequel chacun de la pluralité d'autres UAV suiveurs :
reçoit les informations de formation transmises, et
ajuste une position sur la base des informations de formation reçues.

12. Dispositif électronique faisant partie du système selon la revendication 1, dans lequel le dispositif électronique est configuré pour fonctionner comme l'UAV de tête (104).
